# FASCICULE DE BREVET EUROPEEN

(11) **EP 1 807 618 B1**
(45) Date de publication et mention de la délivrance du brevet: **10.08.2011**
(21) Numéro de dépôt: 05815840.3
(22) Date de dépôt: 20.10.2005
(51) Int. Cl.: F02D 41/02, F02D 41/12

(54) **PROCEDE D'ELABORATION D'UNE CARTOGRAPHIE DE CONSIGNE DE TEMPERATURE EN ENTREE DE FILTRE A PARTICULES**
VERFAHREN ZUR AUSARBEITUNG EINER TEMPERATURINSTRUKTIONS-KARTOGRAPHIE BEIM EINTRITT IN EINEM PARTIKELFILTER
METHOD FOR WORKING OUT A TEMPERATURE INSTRUCTION CARTOGRAPHY AT ENTRY INTO A PARTICLE FILTER

(30) Priorité: 25.10.2004 FR 0452428
(43) Date de publication de la demande: 18.07.2007
(73) Titulaire: Renault s.a.s., 92100 Boulogne Billancourt (FR)
(72) Inventeur: DANEAU, Marc, F-92100 Boulogne Billancourt (FR); PILLOT, Adrien, F-91290 Arpajon (FR)
(86) Numéro de dépôt international: PCT/FR2005/050875
(87) Numéro de publication internationale: WO 2006/045973

(56) Documents cités:
- EP-A- 1 245 814
- EP-A- 1 426 591
- EP-A- 1 464 817
- EP-A- 1 517 026
- WO-A-02/27162

## Description

### DOMAINE TECHNIQUE

La présente invention se rapporte de façon générale au domaine de la régénération d'un filtre à particules agencé dans un circuit d'échappement associé à un moteur Diesel pour véhicule automobile.

Plus précisément, l'invention a trait à un procédé d'élaboration d'une cartographie de consigne de température en entrée de filtre à particules, cette cartographie étant destinée à faire varier la consigne au cours d'une même régénération, en fonction d'entrées renseignant sur l'état du filtre à particules en temps réel.

Par ailleurs, la présente invention concerne aussi une telle cartographie destinée à équiper une unité de contrôle d'un moteur Diesel, un véhicule automobile comprenant une unité de contrôle munie de cette cartographie, ainsi qu'un procédé de commande d'une régénération mis en oeuvre à l'aide de cette même cartographie.

### ÉTAT DE LA TECHNIQUE ANTÉRIEURE

Dans l'art antérieur, l'élaboration de la consigne de température en entrée de filtre à particules est habituellement réalisée expérimentalement, par des essais de régénération. Pour ce faire, avec un moteur Diesel et un filtre à particules chargé de suie jusqu'à une valeur de déclenchement de régénération, on initie une régénération et on provoque un retour ralenti.

On s'assure alors que la température en sortie de filtre à particules ne dépasse pas une température maximale admissible au-delà de laquelle le filtre à particules est susceptible d'être détérioré voir par exemple EP 1426591.

Si celle-ci est dépassée, un ou plusieurs essais sont ensuite reconduits avec des valeurs réduites de consigne de température en entrée de filtre à particules, jusqu'à ce que la température en sortie de filtre à particules relevée, durant le retour au ralenti, soit inférieure à la température maximale admissible précitée.

Bien entendu, cette manipulation est réitérée jusqu'à ce que le champ de fonctionnement du moteur ait été entièrement balayé.

Si cette technique d'élaboration de la consigne de température en entrée de filtre à particules permet de limiter les risques de destruction de ce filtre par emballement de la régénération, elle présente néanmoins un inconvénient majeur.

En effet, l'élaboration précédemment décrite conduit à obtenir une consigne de valeur fixe qui sera appliquée durant toute la régénération, ce qui ne permet pas de maximiser la vitesse de régénération à chaque instant de cette même régénération.

Ainsi, la durée prolongée et non optimisée de ces phases de régénération périodiques, obtenues en augmentant d'une façon connue la température des gaz d'échappement, peut avoir des conséquences néfastes non négligeables en termes de dégradation des propriétés physico-chimiques de l'huile de lubrification du moteur, de fatigue mécanique de la turbine, ou encore d'usure de la fonction d'oxydation du catalyseur d'oxydation.

### EXPOSÉ DE L'INVENTION

L'invention a donc pour but de proposer un procédé d'élaboration d'une cartographie de consigne de température en entrée de filtre à particules, cette cartographie étant destinée à permettre, en fonction de l'état du filtre à particules, de modifier la valeur de la consigne au cours d'une même phase de régénération, dans le but de maximiser et d'optimiser la vitesse de régénération, tout en évitant les risques de détérioration de ce filtre à particules.

Pour ce faire, l'invention a pour objet un procédé d'élaboration d'une cartographie de consigne de température en entrée de filtre à particules, la cartographie étant destinée à équiper une unité de contrôle d'un moteur Diesel pour véhicule automobile disposant d'un circuit d'échappement dans lequel est agencé un filtre à particules apte à subir une régénération par combustion des suies présentes au sein de ce même filtre, la régénération étant provoquée par une élévation de la température des gaz d'échappement en entrée de filtre à particules, laquelle élévation étant fonction de la consigne de température en entrée de filtre à particules.

Selon l'invention, le procédé d'élaboration comprend une étape consistant, pour chaque combinaison associée à un instant t de la régénération et appartenant à un ensemble de combinaisons, (a) d'une masse de suie au sein du filtre à particules; (b) d'une température en sortie de filtre à particules; (c) d'un débit d'air à travers le filtre à particules; et (d) d'une vitesse de combustion des suies 10 au sein du filtre à particules; à déterminer la valeur à affecter à la consigne de température en entrée de filtre à particules, cette valeur étant recherchée de telle sorte que, après l'initiation d'un lâché de pied à l'instant t et quelque soit le profil de lâché de pied choisi parmi un ensemble de profils de lâché de pied, la température en sortie de filtre à particules reste inférieure à une température maximale admissible au-delà de laquelle le filtre à particules est susceptible d'être détérioré.

Il est donc à comprendre que la cartographie ainsi obtenue, permet, lors de sa mise en oeuvre, de modifier la valeur de la consigne de température en entrée de filtre à particules au cours d'une même phase de régénération, en fonction des quatre entrées/paramètres précités relatifs à l'état du filtre à particules en temps réel.

Par voie de conséquence, la vitesse de régénération peut ainsi être optimisée et maximisée, ce qui implique que les risques liés aux réalisations de l'art antérieur concernant la dégradation des propriétés physico-chimiques de l'huile de lubrification du moteur, la fatigue mécanique de la turbine, ou encore l'usure de la fonction d'oxydation du catalyseur d'oxydation, sont avantageusement largement diminués.

De plus, l'expérience montrant que c'est lors des lâchés de pied suivis ou non de retours au ralenti que le risque d'emballement est le plus élevé, l'étape de détermination pour chaque combinaison de la valeur à affecter à la consigne de température en entrée de filtre à particules a donc été dictée par cette contrainte. A ce titre, il est noté que le procédé selon l'invention prenant en compte les contraintes liées à chacun des profils de lâché de pied appartenant à un ensemble de profils de lâché de pied couvrant de préférence l'arrêt brutal jusqu'au long lâché de pied dans une descente en passant par le changement de vitesse, les risques d'emballement et/ou de destruction du filtre à particules durant les phases de lâché de pied et/ou de retour au ralenti sont de cette façon quasiment réduits à néant.

En d'autres termes, avec une telle cartographie, à l'instant t quelconque de la régénération, la consigne de température en entrée de filtre à particules est avantageusement adaptée de sorte que même si un lâché de pied du pire type intervient juste à cet instant t, le filtre à particules ne subira aucun emballement, et pourra donc préserver son intégrité de façon certaine.

Par ailleurs, l'invention a également pour objet une cartographie de consigne de température en entrée de filtre à particules, cette cartographie étant destinée à équiper une unité de contrôle d'un moteur Diesel pour véhicule automobile disposant d'un circuit d'échappement dans lequel est agencé un filtre à particules apte à subir une régénération par combustion des suies présentes au sein de ce même filtre, la régénération étant provoquée par une élévation de la température des gaz d'échappement en entrée de filtre à particules, laquelle élévation étant fonction de la consigne de température en entrée de filtre à particules. Selon l'invention, cette cartographie comporte quatre entrées correspondant respectivement (a) une masse de suie au sein du filtre à (b) une température en sortie de filtre à (c) un débit d'air à travers le filtre à particules; et (d) une vitesse de combustion des suies au sein du filtre à particules.

De plus, elle comporte une sortie correspondant à la consigne de température en entrée de filtre à particules.

D'autre part, cette cartographie conçue de façon à permettre la variation de la valeur de la consigne de température en entrée de filtre à particules durant la régénération, est élaborée par un procédé tel que celui présenté ci-dessus.

L'invention a aussi pour objet un véhicule automobile comprenant un moteur Diesel, un circuit 25 30 d'échappement équipé d'un filtre à particules, et une unité de contrôle du moteur munie d'une cartographie de consigne de température en entrée de filtre à particules, telle que celle qui vient d'être décrite.

Enfin, la présente invention a pour objet un procédé de commande d'une régénération d'un filtre à particules agencé dans un circuit d'échappement d'un moteur Diesel pour véhicule automobile, ce procédé étant mis en uvre à l'aide d'une cartographie de consigne de température en entrée de filtre à particules, telle que celle qui vient d'être décrite.

D'autres avantages et caractéristiques de l'invention apparaîtront dans la description détaillée non limitative ci-dessous.

### BRÈVE DESCRIPTION DES DESSINS

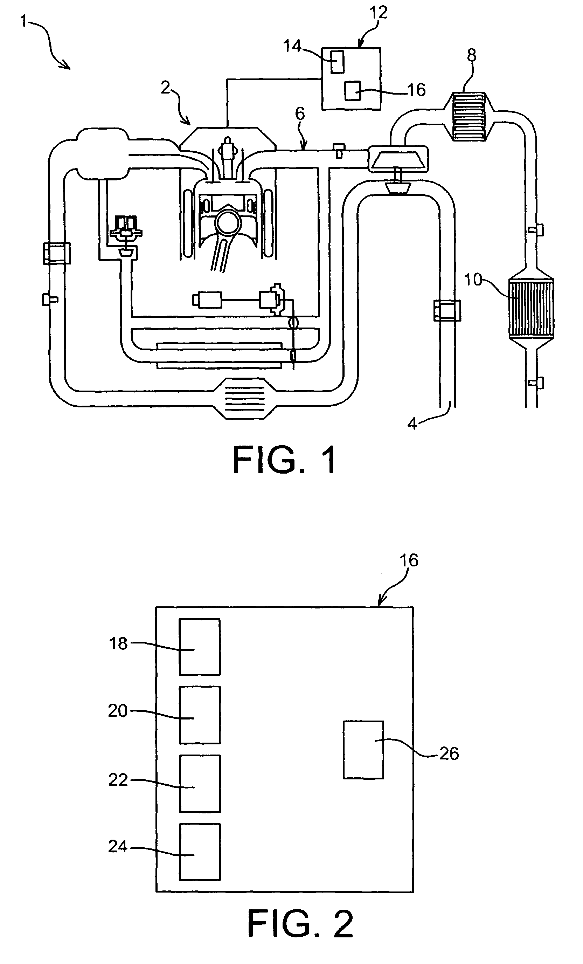

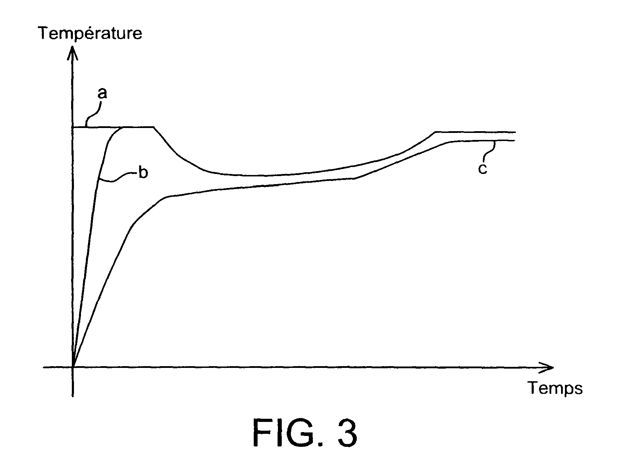

Cette description sera faite au regard des dessins annexés parmi lesquels; la figure 1 représente une vue schématique d'un ensemble moteur Diesel pour véhicule automobile, cet ensemble moteur comprenant une unité de contrôle équipée d'une cartographie de consigne de température en entrée de filtre à particules, selon un mode de réalisation préféré de la présente invention; - la figure 2 représente une vue schématique agrandie de la cartographie montrée sur la figure 1; et - la figure 3 représente un graphe schématisant l'évolution, au cours d'une régénération, de la consigne de température d'entrée de filtre à particules imposée par la cartographie de la figure 2, de la température d'entrée de filtre à particules et de la température de sortie de filtre à particules.

### EXPOSÉ DÉTAILLÉ DE MODES DE RÉALISATION PRÉFÉRÉS

En référence tout d'abord à la figure 1, on peut voir un ensemble moteur 1 pour véhicule automobile, cet ensemble 1 comprenant globalement un moteur Diesel 2, une entrée d'air 4, et un circuit d'échappement 6 équipé d'un catalyseur d'oxydation 8 et d'un filtre à particules 10, classique ou catalytique.

De plus, l'ensemble 1 est pourvu d'une unité de contrôle 12 du moteur Diesel 2, cette unité de contrôle comportant des moyens classiques 14 et connus de l'homme du métier, ainsi qu'une cartographie 16 de consigne de température en entrée de filtre à particules, cette consigne étant dénommée consigne TEFAP dans la suite de la description.

Lors d'une régénération du filtre 10 déclenchée par la détection d'une masse trop importante de suie à l'intérieur de ce même filtre 10, la valeur de la consigne TEFAP appliquée a une influence directe sur l'importance de l'échauffement des gaz d'échappement, cet échauffement provoquant l'élimination des suies par combustion étant d'ailleurs obtenu par l'une quelconque des techniques classiques, telles que le retardement d'injection principale de carburant, l'augmentation du débit de la post injection rapprochée, ou encore l'augmentation du débit de la post injection éloignée.

Plus précisément, en référence à la figure 30 2, la cartographie 16 dispose de quatre entrées 18, 20, 22, 24, et d'une sortie 26 correspondant à la consigne TEFAP qui peut donc varier durant une même régénération, en fonction de la valeur des quatre entrées. Naturellement, il est noté que cette cartographie 16 est uniquement sollicitée durant les régénérations du filtre 10, et non pendant les phases normales de fonctionnement du moteur 2, où aucune commande spécifique relative à l'augmentation de la température des gaz d'échappement n'est normalement ordonnée. De plus, comme cela sera exposé de façon détaillée ci-après, la cartographie 16 est conçue de telle sorte qu'une valeur prédéterminée de consigne TEFAP est associée à chaque combinaison possible pour les quatre entrées qui vont être présentées ci-dessous.

L'entrée 18 correspond à une masse de suie au sein du filtre 10, et l'entrée 20 correspond à une température en sortie de filtre à particules, cette température étant dénommée TSFAP dans la suite de la description. De façon analogue, on notera TEFAP la température en entrée de filtre à particules.

En outre, l'entrée 22 correspond à un débit d'air à travers le filtre 10, et l'entrée 24 est relative à une vitesse de combustion des suies au sein de ce même filtre.

A titre informatif, il est précisé que ces quatre paramètres ont été retenus en raison du fait qu'ils permettent de renseigner de façon extrêmement satisfaisante sur l'état du filtre 10 à un instant t quelconque de la régénération de ce filtre 10. D'autre part, ils ont été judicieusement choisis suite à une analyse approfondie du fonctionnement d'une régénération au sein d'un filtre à particules, qui a permis de mettre en évidence le fait que la TSFAP dépendait du compromis entre la masse de suies brûlée par unité de temps (c'est-à-dire la vitesse de combustion), et le débit d'air à travers ce filtre à particules. Par ailleurs, cette analyse a également permis d'établir que la vitesse de la régénération dépendait du taux d'oxygène en entrée de filtre et de la température de ce filtre à particules, cette dernière correspondant à la TEFAP à laquelle est ajoutée la chaleur dégagée par la combustion des suies déjà éliminées.

A titre indicatif, il est noté que durant la régénération, les valeurs des quatre entrées 18, 20, 22, 24, constituant conjointement une combinaison donnée à laquelle la cartographie 16 permet d'associer une valeur prédéterminée de consigne TEFAP, sont réactualisées de façon régulière en temps quasiment réel à l'aide de capteurs présents sur l'ensemble moteur 1, et/ou d'estimations, éventuellement en association avec un ou plusieurs modules de calcul.

En référence à la figure 3, on peut voir un graphe montrant l'évolution de différentes températures en fonction du temps, au cours d'une régénération du filtre 10 déclenchée de façon classique et pilotée ensuite par la cartographie 16 objet de l'invention. Sur ce graphe, la courbe a représente la consigne TEFAP, la courbe b la TEFAP, et la courbe c la TSFAP.

Comme on peut l'apercevoir, au début de la régénération, la consigne TEFAP est à son maximum, et la TEFAP réelle/estimée prend un peu de temps avant d'atteindre la valeur de cette consigne, en raison de l'inertie du système. Lorsque la TSFAP a augmenté de façon significative, la consigne TEFAP commence à diminuer légèrement, et c'est par ailleurs un peu après cet instant que les suies commencent à brûler au sein du filtre 10. Ainsi, après une combustion significative des suies, la consigne TEFAP peut alors augmenter, jusqu'à atteindre à nouveau sa valeur maximale en fin de régénération.

Ces courbes montrent notamment que la consigne TEFAP délivrée par la cartographie 16 traduit largement des constatations faites durant l'élaboration de cette dernière, à savoir d'une part que plus la TSFAP est inférieure à la TEFAP, plus la consigne TEFAP peut être élevée, et d'autre part que plus la masse de suie est importante, plus la consigne TEFAP peut également être élevée.

Il va à présent être décrit un procédé d'élaboration de la cartographie 16 de consigne TEFAP associée au filtre 10, selon un mode de réalisation préféré de la présente invention.

Tout d'abord, il est précisé que ce procédé d'élaboration est effectué lors du développement du moteur 2, de préférence à partir d'un modèle informatique dynamique de combustion des suies au sein du filtre 10 (ce modèle n'étant pas représenté), ce modèle étant capable de calculer à chaque instant durant une régénération simulée, la masse de suie au sein du filtre 10, la TSFAP, et la vitesse de combustion des suies au sein du filtre 10, à partir de données concernant la TEFAP, la masse de suie à un instant de début de la régénération, le débit d'air à travers le filtre 10, et le taux d'oxygène en entrée de filtre à particules. Les données précitées sont estimées, ou obtenues directement à l'aide de capteurs placés sur un banc d'essai comprenant le moteur 2.

De cette manière, on peut comprendre que le modèle informatique est capable, à tout instant t de la régénération simulée, de connaître la valeur des quatre entrées 18, 20, 22, 24 de la cartographie 16 à élaborer, ces valeurs d'entrées constituant conjointement une combinaison donnée associée à cet instant t.

En outre, ce modèle informatique dont le contenu est adapté au modèle spécifique de filtre à particules retenu pour être installé ultérieurement en association avec le moteur 2, permet donc avantageusement d'élaborer la cartographie 16 en réalisant des essais à l'aide de ce même moteur 2, sans que le filtre à particules en question n'ait besoin d'être présent matériellement sur le banc d'essai.

Ainsi, pour une combinaison donnée associée à un instant t de la régénération, on détermine par expérimentation la valeur à affecter à la consigne TEFAP, cette valeur étant recherchée de telle sorte que, après l'initiation d'un lâché de pied à l'instant t, la TSFAP reste inférieure à une température maximale admissible au-delà de laquelle le filtre 10 est susceptible d'être détérioré, et ce durant toute la période du lâché de pied opéré de façon contrôlée. Bien entendu, le lâché de pied se traduit dans le cas présent par l'application d'une commande spécifique et adaptée au moteur 2 du banc d'essai.

Pour une même combinaison donnée, la valeur à affecter à la consigne TEFAP est recherchée en réalisant des essais pour tous les profils de lâché de pied appartenant à un ensemble de profils de lâché de pied, cet ensemble couvrant de préférence tous les cas de l'arrêt brutal jusqu'au long lâché de pied dans une descente, en passant par le changement de vitesse.

A cet égard, il est noté que l'ensemble de profils de lâché de pied est établi expérimentalement ou par simulation, à l'aide de paramètres variant en fonction du temps, qui sont la TEFAP, le débit d'air à travers le filtre 10, et le taux d'oxygène en entrée de filtre à particules.

A titre indicatif, pour une valeur initiale de TEFAP donnée, la manière dont elle évolue au cours du lâché de pied est liée entre autres au débit d'air, à l'inertie thermique d'éléments amont tels que le tube d'échappement et le catalyseur d'oxydation 8, ainsi qu'à la vitesse du véhicule qui influe sur le refroidissement de ces mêmes éléments. D'autre part, pour une valeur de débit d'air initiale donnée, la façon dont elle évolue est liée entre autres à la vitesse à laquelle le véhicule ralenti, et au taux de remplissage du moteur. Enfin, pour le taux d'oxygène, les variations sont quasiment instantanées, et à priori, durant le lâché de pied, le taux est maintenu à 21 %.

Bien entendu, pour maximiser la vitesse de régénération du filtre 10, la valeur retenue pour la consigne TEFAP est de préférence la valeur maximale qui remplit la condition sur la TSFAP après l'instant de début de coupure de l'injection de carburant correspondant à l'instant t de l'initiation du lâché de pied, et ce pour tous les profils de lâché de pied envisagés.

Par ailleurs, pour l'élaboration de la cartographie 16, une valeur de consigne TEFAP doit être déterminée pour chaque combinaison appartenant à un ensemble de combinaisons couvrant de préférence la totalité de l'espace de variation.

Il est avantageux d'automatiser toutes ces tâches par un programme informatique, qui permettra donc, au final, d'affecter une valeur précise de consigne TEFAP à chaque combinaison possible, sans risque que cette valeur ne provoque ultérieurement, lors du fonctionnement de l'ensemble moteur 1 équipé de cette cartographie 16, un emballement de la régénération, et ce même lorsque le conducteur est amené à réaliser deux lâchés de pied successifs durant une même régénération, et entre lesquelles il ré-accélère.

Bien entendu, diverses modifications peuvent être apportées par l'homme du métier au procédé d'élaboration de la cartographie 16 et à cette même cartographie 16 qui viennent d'être décrits, uniquement à titre d'exemples non limitatifs.

## Revendications

1. Procédé d'élaboration d'une cartographie {16) liant une sortie (26), correspondant à une consigne de température en entrée de filtre à particules, à quatre entrées (18, 20, 22, 24) constituées d'une entrée (18) d'une masse de suie au sein du filtre à particules (10), d'une entrée (20) d'une température en sortie de filtre à particules, d'une entrée (22) d'un débit d'air à travers le filtre à particules (10) et d'une entrée (24) d'une vitesse de combustion des suies au sein du filtre à particules {10),
ladite cartographie étant destinée à équiper une unité de contrôle (12) d'un moteur Diesel (2) pour véhicule automobile disposant d'un circuit d'échappement (6) dans lequel est agencé un filtre à particules (10) apte à subir une régénération par combustion des suies présentes au sein de ce même filtre, ladite régénération étant provoquée par une élévation de la température des gaz d'échappement en entrée de filtre à particules (10), laquelle élévation étant fonction de ladite consigne de température en entrée de filtre à particules,
ledit procédé d'élaboration de ladite cartographie étant **caractérisé en ce qu'**il comprend une étape consistant, pour chaque combinaison
(a) d'une masse de suie au sein du filtre à particules (10) ;
(b) d'une température en sortie de filtre à particules (TSFAP) ;
(c) d'un débit d'air à travers le filtre à particules (10) ; et
(d) d'une vitesse de combustion des suies au sein du filtre à particules {10)
associées à un instant t de la régénération et appartenant à un ensemble de combinaisons,
à déterminer la valeur à affecter à ladite consigne de température en entrée de filtre à particules, cette valeur étant recherchée de telle sorte que, après l'initiation d'un lâché de pied audit instant t et quelque soit le profil de lâché de pied choisi parmi un ensemble de profils de lâché de pied, la température en sortie de filtre à particules (TSFAP) reste inférieure à une température maximale admissible au-delà de laquelle ledit filtre à particules (10) est susceptible d'être détérioré,
le procédé étant par ailleurs mis en oeuvre à partir d'un modèle informatique dynamique de combustion des suies au sein du filtre à particules (10), ce modèle étant capable de calculer à chaque instant durant une régénération, ladite masse de suie au sein du filtre à particules (10), la température en sortie de filtre à particules (TSFAP), et ladite vitesse de combustion des suies au sein du filtre à particules (10), à partir de données concernant une température en entrée de filtre à particules (TEFAP), la masse de suie à un instant de début de ladite régénération, ledit débit d'air à travers le filtre à particules (10), et le taux d'oxygène en entrée de filtre à particules (10).

2. Procédé selon la revendication 1, **caractérisé en ce que** ledit ensemble de profils de lâché de pied est établi expérimentalement ou par simulation, à l'aide des paramètres suivants variant en fonction du temps:
- ladite température en entrée de filtre à particules (TEFAP) ;
- ledit débit d'air à travers le filtre à particules (10) ; et le taux d'oxygène en entrée de filtre à particules (10).

3. Cartographie (16) de consigne de température en entrée de filtre à particules, ladite cartographie étant destinée à équiper une unité de contrôle (12) d'un moteur Diesel (2) pour véhicule automobile disposant d'un circuit d'échappement (6) dans lequel est agencé un filtre à particules (10) apte à subir une régénération par combustion des suies présentes au sein de ce même filtre, ladite régénération étant provoquée par une élévation de la température des gaz d'échappement en entrée de filtre à particules (10), laquelle élévation étant fonction de ladite consigne de température en entrée de filtre à particules, **caractérisée en ce qu'**elle comporte quatre entrées (18, 20, 22, 24) correspondant respectivement à: (a) une masse de suie au sein du filtre à particules (10) ; (b) une température en sortie de filtre à particules (TSFAP) ; (c) un débit d'air à travers le filtre à particules (10) ; et (d) une vitesse de combustion des suies au sein du filtre à particules (10), et **en ce qu'**elle comporte une sortie (26) correspondant à ladite consigne de température en entrée de filtre à particules.

4. Cartographie selon la revendication 3, **caractérisée en ce que** ladite cartographie (16), conçue de façon à permettre une variation de la valeur de ladite consigne de température en entrée de filtre à particules durant ladite régénération, est élaborée par un procédé selon l'une quelconque des revendications 1 à 2.

5. Véhicule automobile comprenant un moteur Diesel (2), un circuit d'échappement (6) équipé d'un filtre à particules (10), et une unité de contrôle (12) du moteur (2) munie d'une cartographie (16) de consigne de température en entrée de filtre à particules, le véhicule étant **caractérisé en ce que** ladite cartographie (16) est une cartographie selon la revendication 3 ou la revendication 4.

6. Procédé de commande d'une régénération d'un filtre à particules (10) agencé dans un circuit d'échappement (6) d'un moteur Diesel (2) pour véhicule automobile, **caractérisé en ce qu'**il est mis en oeuvre à l'aide d'une cartographie (16) de consigne de température en entrée de filtre à particules selon la revendication 3 ou la revendication 4.

## Claims

1. Method for preparing a map (16) linking an output (26), corresponding to a particulate-filter input temperature instruction, having four inputs (18, 20, 22, 24) comprising an input (18) of a mass of soot within the particulate filter (10), an input (20) of a particulate-filter output temperature, an input (22) of an air-flow rate through the particulate filter (10) and an input (24) of a soot combustion rate within the particulate filter (10),
said map being intended to be fitted to a control unit (12) of a diesel engine (2) for a motorcar having an exhaust circuit (6) containing a particulate filter (10) able to undergo a regeneration by combustion of the soot in the filter, said regeneration being triggered by an increase in the temperature of the exhaust gases entering the particulate filter (10), said increase being a function of said particulate-filter input temperature instruction,
said preparation method of said map being **characterised in that** it comprises a step comprising, for each combination of
(a) a mass of soot within the particulate filter (10);
(b) a particulate-filter output temperature (TSFAP);
(c) an air-flow rate through the particulate filter (10) ; and
(d) a combustion rate of the soot within the particulate filter (10)
associated to an instant t of the regeneration and belonging to a set of combinations,
determining the value to be allocated to said particulate-filter input temperature instruction, this value being adjusted such that, following the start of a pedal release at said instant t and regardless of the profile of the pedal release chosen from a set of pedal-release profiles, the particulate-filter output temperature (TSFAP) remains below a maximum admissible temperature beyond which said particulate filter (10) is liable to be damaged,
the method being furthermore implemented using a dynamic computer model for the combustion of soot within the particulate filter (10), this model being able to calculate at each instant during a regeneration, said mass of soot within the particulate filter (10), the particulate-filter output temperature (TSFAP), and said soot combustion rate within the particulate filter (10), using data on a particulate-filter input temperature (TEFAP), the mass of soot at a starting instant of said regeneration, said air-flow rate through the particulate filter (10), and the oxygen rate at the input of the particulate filter (10).

2. Method according to Claim 1, **characterised in that** said set of pedal-release profiles is established experimentally or by simulation, using the following parameters varying as a function of time:
- said particulate-filter input temperature (TEFAP);
- said air-flow rate through the particulate filter (10) ; and the oxygen rate at the input of the particulate filter (10).

3. Particulate-filter input temperature instruction map (16), said map being intended to be fitted to a control unit (12) of a diesel engine (2) for a motorcar having an exhaust circuit (6) containing a particulate filter (10) able to undergo a regeneration by combustion of the soot in the filter, said regeneration being triggered by an increase in the temperature of the exhaust gases entering the particulate filter (10), said increase being a function of said particulate-filter input temperature instruction, **characterised in that** it includes four inputs (18, 20, 22, 24) corresponding respectively to: (a) a mass of soot within the particulate filter (10) ; (b) a particulate-filter output temperature (TSFAP) ; (c) an air-flow rate through the particulate filter (10) ; and (d) a combustion rate of the soot within the particulate filter (10), and **in that** it includes an output (26) corresponding to said particulate-filter input temperature instruction.

4. Map according to Claim 3, **characterised in that** said map (16), designed such as to enable a variation in the value of said particulate-filter input temperature instruction during said regeneration, is prepared using a method according to any one of Claims 1 to 2.

5. Motorcar having a diesel engine (2), an exhaust circuit (6) fitted with a particulate filter (10), and a control unit (12) of the engine (2) provided with a particulate-filter input temperature instruction map (16), the vehicle being **characterised in that** said map (16) is a map according to Claim 3 or Claim 4.

6. Regeneration command method for a particulate filter (10) incorporated into an exhaust circuit (6) of a diesel engine (2) of a motorcar, **characterised in that** it is implemented using a particulate-filter input temperature instruction map (16) according to Claim 3 or Claim 4.

## Patentansprüche

1. Verfahren zur Erarbeitung eines Kennfelds {16), das einen Ausgang (26), der einem Temperatursollwert am Eingang eines Partikelfilters entspricht, mit vier Eingängen (18, 20, 22, 24) verbindet, die aus einem Eingang (18) einer Masse innerhalb des Partikelfilters (10), einem Eingang (20) einer Temperatur am Ausgang des Partikelfilters, einem Eingang (22) eines Luftdurchsatzes durch den Partikelfilter (10) und einem Eingang (24) einer Verbrennungsgeschwindigkeit innerhalb des Partikelfilters {10) bestehen,
wobei das Kennfeld dazu bestimmt ist, eine Steuereinheit (12) eines Dieselmotors (2) für ein Kraftfahrzeug auszustatten, der über einen Abgaskreislauf (6) verfügt, in dem ein Partikelfilter (10) angeordnet ist, der eine Regenerierung durch Verbrennung des Rußes erfahren kann, der in diesem Filter vorhanden ist, wobei die Regenerierung durch eine Erhöhung der Temperatur der Abgase am Eingang des Partikelfilters (10) hervorgerufen wird, wobei die Erhöhung vom Temperatursollwert am Eingang des Partikelfilters abhängt,
wobei das Verfahren zur Erarbeitung des Kennfelds **dadurch gekennzeichnet ist, dass** es einen Schritt enthält, der für jede Kombination besteht aus
(a)einer Rußmasse innerhalb des Partikelfilters (10) ;
(b)einer Temperatur am Ausgang des Partikelfilters (TSFAP) ;
(c)einem Luftdurchsatz durch den Partikelfilter (10), und
(d)einer Rußverbrennungsgeschwindigkeit innerhalb des Partikelfilters {10),
die einem Zeitpunkt t der Regenerierung zugeordnet sind und zu einer Gruppe von Kombinationen gehören,
den dem Temperatursollwert am Eingang des Partikelfilters zuzuordnenden Wert zu bestimmen, wobei dieser Wert so ausgesucht wird, dass nach dem Beginn einer Gaswegnahme im Zeitpunkt t und unabhängig vom Profil der Gaswegnahme, das aus einer Gruppe von Profilen der Gaswegnahme ausgewählt wird, die Temperatur am Ausgang des Partikelfilters (TSFAP) unter einer maximal zulässigen Temperatur bleibt, jenseits von der der Partikelfilter (10) zerstört werden kann,
wobei das Verfahren außerdem ausgehend von einem dynamischen Computermodell der Verbrennung des Rußes innerhalb des Partikelfilters (10) angewendet wird, wobei dieses Modell jederzeit während einer Regenerierung die Rußmasse innerhalb des Partikelfilters (10), die Temperatur am Ausgang des Partikelfilters (TSFAP) und die Verbrennungsgeschwindigkeit des Rußes innerhalb des Partikelfilters (10) ausgehend von Daten berechnen kann, die eine Temperatur am Eingang des Partikelfilters (TEFAP), die Rußmasse in einem Augenblick zu Beginn der Regenerierung, den Luftdurchsatz durch den Partikelfilter (10) und den Sauerstoffgehalt am Eingang des Partikelfilters (10) betreffen.

2. Verfahren nach Anspruch 1, **dadurch gekennzeichnet, dass** die Gruppe von Profilen der Gaswegnahme experimentell oder durch Simulation erstellt wird, mit Hilfe der folgenden Parameter, die zeitabhängig variieren:
- der Temperatur am Eingang des Partikelfilters (TEFAP) ;
- des Luftdurchsatzes durch den Partikelfilter (10) ; und dem Sauerstoffgehalt am Eingang des Partikelfilters (10).

3. Kennfeld (16) eines Temperatursollwerts am Eingang eines Partikelfilters, wobei das Kennfeld dazu bestimmt ist, eine Steuereinheit (12) eines Dieselmotors (2) für ein Kraftfahrzeug auszustatten, der über einen Abgaskreislauf (6) verfügt, in dem ein Partikelfilter (10) angeordnet ist, der eine Regenerierung durch Verbrennung des Rußes erfahren kann, der in diesem Filter vorhanden ist, wobei die Regenerierung durch eine Erhöhung der Temperatur der Abgase am Eingang des Partikelfilters (10) hervorgerufen wird, wobei die Erhöhung vom Temperatursollwert am Eingang des Partikelfilters abhängt, **dadurch gekennzeichnet, dass** es vier Eingänge (18, 20, 22, 24) aufweist, die jeweils entsprechen: (a) einer Rußmasse innerhalb des Partikelfilters (10) ; (b) einer Temperatur am Ausgang des Partikelfilters (TSFAP); (c) einem Luftdurchsatz durch den Partikelfilter (10), und (d) einer Rußverbrennungsgeschwindigkeit innerhalb des Partikelfilters {10), und dass es einen Ausgang (26) aufweist, der dem Temperatursollwert am Eingang des Partikelfilters entspricht.

4. Kennfeld nach Anspruch 3, **dadurch gekennzeichnet, dass** das Kennfeld (16), das so konzipiert ist, dass es eine Veränderung des Werts des Temperatursollwerts am Eingang des Partikelfilters während der Regenerierung erlaubt, durch ein Verfahren nach einem der Ansprüche 1 bis 2 erarbeitet wird.

5. Kraftfahrzeug mit einem Dieselmotor (2), einer Abgasanlage (6), die mit einem Partikelfilter (10) ausgestattet ist, und mit einer Steuereinheit (12) des Motors (2), die mit einem Kennfeld (16) des Temperatursollwerts am Eingang des Partikelfilters versehen ist, wobei das Fahrzeug **dadurch gekennzeichnet ist, dass** das Kennfeld (16) ein Kennfeld nach Anspruch 3 oder Anspruch 4 ist.

6. Verfahren zur Steuerung einer Regenerierung eines Partikelfilters (10), der in einer Abgasanlage (6) eines Dieselmotors (2) für ein Kraftfahrzeug angeordnet ist, **dadurch gekennzeichnet, dass** es mit Hilfe eines Kennfelds (16) eines Temperatursollwerts am Eingang des Partikelfilters nach Anspruch 3 oder Anspruch 4 durchgeführt wird.
